# EUROPEAN PATENT APPLICATION

(11) **EP 3 769 958 A1**
(43) Date of publication of application: **27.01.2021**
(21) Application number: 19206398.0
(22) Date of filing: 31.10.2019
(51) Int. Cl.: B32B 15/08, B32B 15/20, B32B 27/08, B32B 27/30, B32B 27/32, B32B 27/34, B32B 33/00, B65D 65/40

(54) **DECORATIVE FILM, PACKAGING MATERIAL USING SAME, AND LABEL STICKER USING SAME**

(30) Priority: 24.07.2019 TW 108209655 U
(71) Applicant: Chuang Hsing-Lieh, New Taipei City 220 (TW)
(72) Inventor: CHUANG, Hsing-Lieh, New Taipei City 220 (TW)
(74) Representative: Strehl Schübel-Hopf & Partner

(57) **Abstract**

A decorative film having: a pattern display layer formed by a transparent heat-resistant layer and a printed layer on a surface of the transparent heat-resistant layer to provide a first pattern, and the pattern display layer having a first side and a second side opposite to the first side; an extrusion-embossed microstructure layer formed on a surface of the second side of the pattern display layer and having a microstructure to provide a second pattern; and a reflective layer overlying the microstructure; when the decorative film is in use, an observer can see a display pattern composed of the first pattern and the second pattern on the first side of the pattern display layer. In addition, the present invention also proposes a packaging material using the decorative film and a label sticker using the decorative film.

## Description

### BACKGROUND OF THE INVENTION

### Field of the Invention

The present invention relates to a decorative film, and more particularly to a decorative film which can be applied to a flexible packaging material, a hard packaging material or a label sticker.

### Description of the Related Art

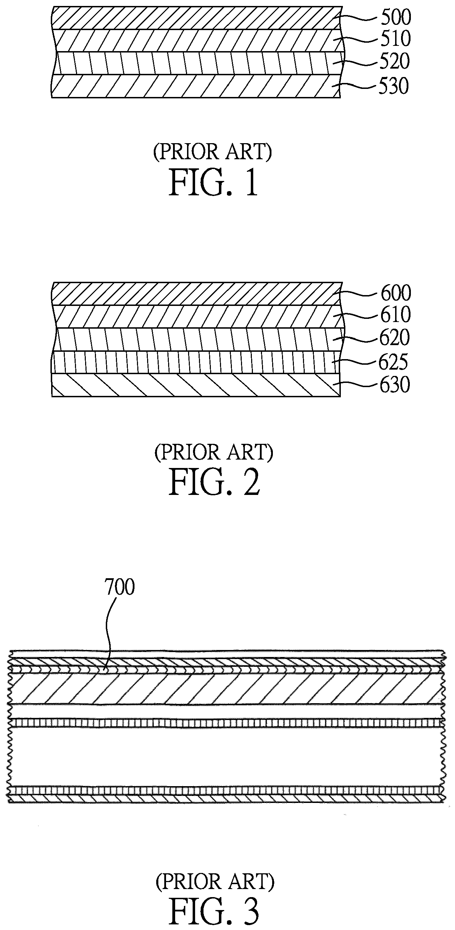

Multilayer flexible packaging film is widely used in packages of food, tea, coffee and other commercial products. Please refer to FIG. 1, which illustrates a cross-sectional view of a conventional multilayer flexible packaging film. As illustrated in FIG. 1, the basic structure thereof includes a transparent heat-resistant layer 500, a printed layer 510, a bonding layer 520, and a heat sealing layer 530.

Please refer to FIG. 2, which illustrates a cross-sectional view of another conventional multilayer flexible packaging film. As shown in FIG. 2, the basic structure thereof includes a transparent heat-resistant layer 600, a printed layer 610, a bonding layer 620, a functional layer 625, and a heat sealing layer 630, where the functional layer 625 can be an aluminum foil or a nylon, EVOH film that enhances the gas barrier property, or can be other thin layers for proving other functions.

The heat sealing layer 630, which can be implemented with low-melting-point material such as PP, PE, EVA, etc., is for enclosing bags of various sizes via a heat sealing process. The printed layer 610 is formed on the surface of the transparent heat-resistant layer 600 which can be realized by a transparent heat-resistant material such as BOPET or Nylon. However, the printed layer 610 can only present a monotonous decoration, and so in recent years, a holographic film has been added in to assist the printed layer 610 to enrich the decoration effect.

Among those prior art proposals that add decorative features to the printed layer, the patent WO 93/008084 adds a holographic film layer between the heat sealing layer and the printed layer to enrich the decoration effect. Please refer to FIG. 3, which illustrates a cross-sectional view of a multilayer flexible packaging film structure disclosed in FIG. 1 of WO 93/008084. As illustrated in FIG. 3, a holographic film 700 is made of a thermoplastic plastic film, which is coated with an environmentally water-based coating and has undergone a hot embossing procedure.

However, the multi-layer flexible packaging film produced by this method is too expensive due to the addition of the holographic film 700, in which the incurred cost includes not only the holographic film 700 but also a bonding process required to bond the holographic film 700 between the heat sealing layer and the printed layer. In addition to the holographic film, there have been a variety of highly decorative microstructure patterns proposed in recent years, such as Fresnel film, relief carving effective film, etc. These microstructures can also be combined with holographic patterns (the holographic pattern is also a microstructure pattern) and color printing to present a more decorative and attractive appearance.

In addition, the Chinese patent CN206032174U discloses a "high decorative multilayer flexible packaging film" which reduces the cost by fabricating a microstructure on a cast polypropylene aluminized film (VMCPP). However, this proposition is only applicable to soft packaging materials which use cast polypropylene aluminized film (VMCPP) as a heat sealing layer. Moreover, if an aluminum foil layer is used to cover the heat sealing layer to block the gas, the pattern of the microstructure will be blocked by the aluminum foil layer.

To solve the aforementioned problems, there is a need in the field for a novel decorative film structure.

### SUMMARY OF THE INVENTION

The main objective of the present invention is to disclose a decorative film which can be applied to flexible packaging materials, hard packaging materials or label stickers with less manufacturing processes and reduced cost.

To attain the above objective, a decorative film is proposed, which includes:
a pattern display layer formed by a transparent heat-resistant layer and a printed layer on a surface of the transparent heat-resistant layer to provide a first pattern, and the pattern display layer having a first side and a second side opposite to the first side;
an extrusion-embossed microstructure layer formed on a surface of the second side of the pattern display layer and having a microstructure to provide a second pattern; and
a reflective layer overlying the microstructure;
when the decorative film is in use, an observer can see a display pattern composed of the first pattern and the second pattern on the first side of the pattern display layer.

In one embodiment, the formation of the reflective layer is accomplished by an evaporation process or a sputtering process.

In one embodiment, the reflective layer is formed by performing a corona treatment or a plasma treatment on the extrusion-embossed microstructure layer first, and then performing an evaporation process or a sputtering process thereon.

For possible embodiments, the material used for the evaporation process or the sputtering process can be aluminum, indium, tin, chromium or ZnS (zinc sulfide).

In one embodiment, the formation of the extrusion-embossed microstructure layer is achieved by performing a polymer material extrusion-coating operation and a roller embossing operation on the pattern display layer.

In one embodiment, the printed layer is on the second side of the pattern display layer.

In one embodiment, the printed layer is on the first side of the pattern display layer.

To attain the above objective, the present invention further proposes a packaging material having a substrate and the decorative film as described above, the decorative film being attached on the substrate.

In one embodiment, the substrate is a flexible substrate.

In one embodiment, the substrate is a rigid substrate.

In one embodiment, the substrate includes: an aluminum foil layer, a surface of which is attached to the reflective layer to provide a barrier to gas and moisture; and a heat sealing layer attached to another surface of the aluminum foil layer to provide a heat sealing function for the packaging material.

For possible embodiments, the heat sealing layer can be PP, PE or EVA.

For possible embodiments, the heat sealing layer can be a single layer or a multilayer coextruded film.

To attain the above objective, the present invention further proposes a label sticker having: a decorative film as described above; and a release paper layer attached with the decorative film via a pressure sensitive adhesive layer.

To make it easier for our examiner to understand the objective of the invention, its structure, innovative features, and performance, we use preferred embodiments together with the accompanying drawings for the detailed description of the invention.

### BRIEF DESCRIPTION OF THE DRAWINGS

FIG. 1 illustrates a cross-sectional view of a conventional multilayer flexible packaging film.
FIG. 2 illustrates a cross-sectional view of another conventional multilayer flexible packaging film.
FIG. 3 illustrates a cross-sectional view of a multilayer flexible packaging film disclosed in FIG. 1 of WO 93/008084.
FIG. 4 illustrates a cross-sectional view of a decorative film according to an embodiment of the present invention.
FIG. 5 illustrates a scheme for forming the extrusion-embossed microstructure layer of the decorative film of FIG. 4.
FIG. 6 illustrates a cross-sectional view of a packaging material including the decorative film of FIG. 4 according to an embodiment of the present invention.
FIG. 7 illustrates a cross-sectional view of a label sticker including the decorative film of FIG. 4 according to an embodiment of the present invention.
FIG. 8 illustrates a cross-sectional view of a decorative film according to another embodiment of the present invention.
FIG. 9 illustrates a cross-sectional view of a packaging material including the decorative film of FIG. 8 according to an embodiment of the present invention.
FIG. 10 illustrates a cross-sectional view of a label sticker including the decorative film of FIG. 8 according to an embodiment of the present invention.

### DETAILED DESCRIPTION OF THE PREFERRED EMBODIMENTS

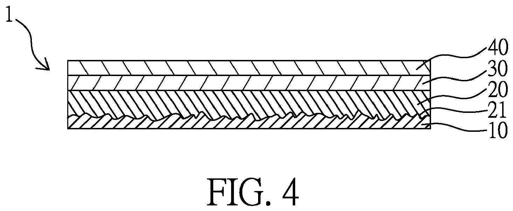

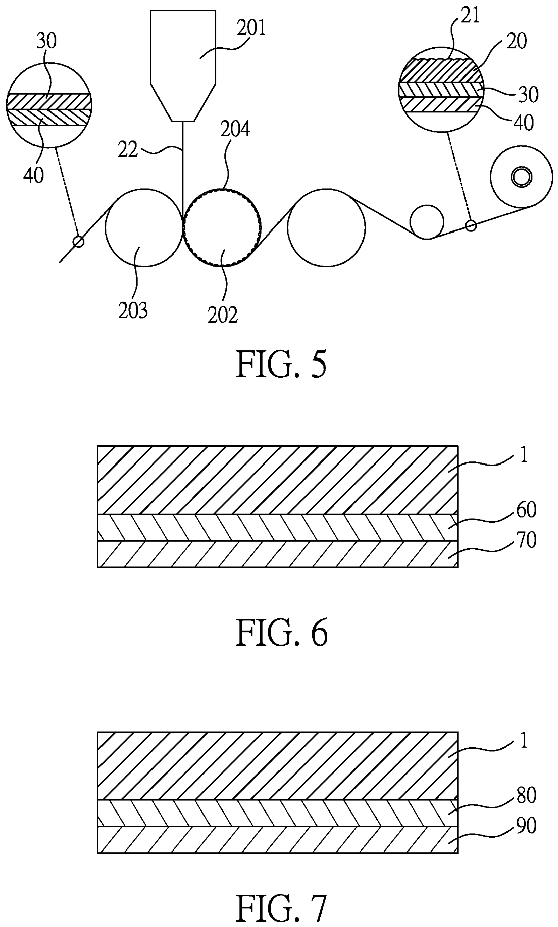

Please refer to FIG. 4 and FIG. 5, where FIG. 4 illustrates a cross-sectional view of a decorative film according to an embodiment of the present invention; and FIG. 5 illustrates a scheme for forming the extrusion-embossed microstructure layer of the decorative film of FIG. 4.

As illustrated in FIG. 4, a decorative film 1 includes from bottom to top a reflective layer 10, an extrusion-embossed microstructure layer 20, a printed layer 30, and a transparent heat-resistant layer 40.

In the process of fabricating the decorative film 1, the printed layer 30 is first printed on a surface of the transparent heat-resistant layer 40 to jointly form a pattern display layer to provide a first pattern, and the pattern display layer has a first side and a second side opposing the first side, in this embodiment, the printed layer 30 is located on the second side, and the first side is used to display a pattern. In addition, the transparent heat-resistant layer 40 can be realized by a PET, OPP or nylon film.

The extrusion-embossed microstructure layer 20 is formed on a surface of the second side of the pattern display layer and has a microstructure 21 to provide a second pattern.

The reflective layer 10 is overlaid on the microstructures 21.

When the decorative film is in use, an observer can see a display pattern composed of the first pattern and the second pattern on the first side of the pattern display layer.

In addition, for possible embodiments, the formation of the reflective layer 10 can be realized by performing an evaporation process or a sputtering process on the extrusion-embossed microstructure layer 20; or by performing a corona treatment or a plasma treatment on the extrusion-embossed microstructure layer 20 first, and then performing an evaporation process or a sputtering process thereon.

In addition, the material used for the evaporation process or the sputtering process can be aluminum, indium, tin, chromium or ZnS (zinc sulfide).

In addition, the formation of the extrusion-embossed microstructure layer 20 can be achieved by performing a polymer material extrusion-coating operation and a roller embossing operation on the pattern display layer.

As illustrated in FIG. 5, the extrusion-embossed microstructure layer 20 is formed by the following steps: using the pattern display layer which includes the printed layer 30 and the transparent heat-resistant layer 40 as a substrate; using a T-die 201 to extrude polymer material 22 in a liquid state on the pattern display layer, and in the meantime using a plate roller 202 (having a microstructured nickel plate 204) and a heat-resistant rubber roller 203 to compress the pattern display layer and the polymer material 22 covering the surface of the pattern display layer to perform the roller embossing operation. In addition, during the roller embossing operation, cooling water passes through the plate roller 202 to cool the polymer material 22, thereby solidifying the microstructure 21.

Based on the above description, the present invention further proposes a packaging material having a substrate and a decorative film as described above attached on the substrate, and the substrate can be a flexible substrate or a rigid substrate. Please refer to FIG. 6, which illustrates a cross-sectional view of a label sticker including the decorative film of FIG. 4 according to an embodiment of the present invention. As illustrated in FIG. 6, the packaging material has a substrate including an aluminum foil layer 60 and a heat sealing layer 70, and a decorative film 1 attached on the substrate, where, a surface of the aluminum foil layer 60 is attached with the reflective layer 10 to provide a barrier to gas and moisture; and the heat sealing layer 70 is attached with another surface of the aluminum foil layer 60 to provide a heat sealing function for the packaging material. In addition, the heat sealing layer 70 can be implemented with PP, PE or EVA, and can be a single layer or a multilayer coextruded film. In practical applications, the packaging material shown in Figure 6 can be used for packaging coffee, tea and other food products at a lower cost than conventional packaging materials.

In light of the above description, the present invention further proposes a label sticker having a decorative film 1 and a release paper layer carrying the decorative film 1. Please refer to FIG. 7, which illustrates a cross-sectional view of a label sticker including the decorative film of FIG. 4 according to an embodiment of the present invention. As shown in FIG. 7, the label sticker has a decorative film 1, a pressure sensitive adhesive layer 80, and a release paper layer 90, where the release paper layer 90 is attached with the decorative film 1 via the pressure sensitive adhesive layer 80.

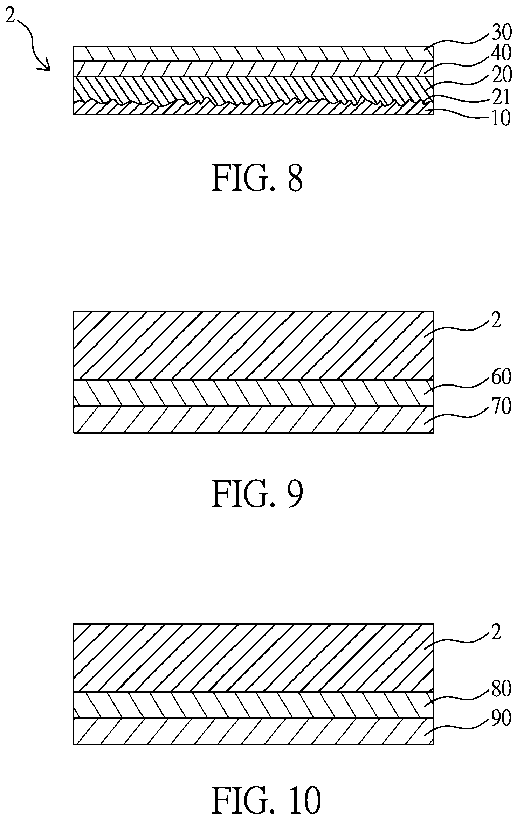

In addition, please refer to FIG. 8, which illustrates a cross-sectional view of a decorative film according to another embodiment of the present invention. As shown in FIG. 8, a decorative film 2 includes a reflective layer 10, an extrusion-embossed microstructure layer 20, a transparent heat-resistant layer 40, and a printed layer 30 from bottom to top. As the details of the reflective layer 10, the extrusion-embossed microstructure layer 20, the transparent heat-resistant layer 40 and the printed layer 30 have been disclosed above, they are not to be readdressed. The decorative film 2 differs from the decorative film 1 of FIG. 4 only in that the positions of the transparent heat-resistant layer 40 and the printed layer 30 are reversed.

In addition, please refer to FIG. 9, which illustrates a cross-sectional view of a packaging material including the decorative film of FIG. 8 according to an embodiment of the present invention. As shown in FIG. 9, the packaging material has a substrate including an aluminum foil layer 60 and a heat sealing layer 70, and a decorative film 2 attached with the substrate, where, a surface of the aluminum foil layer 60 is attached with the reflective layer 10 to provide a barrier to gas and moisture; and the heat sealing layer 70 is attached with another surface of the aluminum foil layer 60 to provide a heat sealing function for the packaging material. In addition, the heat sealing layer 70 can be implemented with PP, PE or EVA, and can be a single layer or a multilayer coextruded film. In practical applications, the packaging material shown in Figure 9 can be used for packaging coffee, tea and other food products at a lower cost than conventional packaging materials.

In addition, please refer to FIG. 10, which illustrates a cross-sectional view of a label sticker including the decorative film of FIG. 8 according to an embodiment of the present invention. As shown in FIG. 10, the label sticker has a decorative film 2, a pressure sensitive adhesive layer 80, and a release paper layer 90, where the release paper layer 90 is attached with the decorative film 2 via the pressure sensitive adhesive layer 80.

Thanks to the designs mentioned above, the decorative film of the present invention has the following advantages:
1. The decorative film of the present invention does not need an additional layer of microstructure film.
2. The decorative film of the present invention can save manufacturing processes and reduce cost.
3. The decorative film of the present invention can be applied to packaging materials and label stickers.

While the invention has been described by way of example and in terms of preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

In summation of the above description, the present invention herein enhances the performance over the conventional structure and further complies with the patent application requirements and is submitted to the Patent and Trademark Office for review and granting of the commensurate patent rights.

## Claims

1. A decorative film (1, 2) comprising:
a pattern display layer formed by a transparent heat-resistant layer (40) and a printed layer (30) on a surface of the transparent heat-resistant layer (40) to provide a first pattern, and the pattern display layer having a first side and a second side opposite to the first side;
an extrusion-embossed microstructure layer (20) formed on a surface of the second side of the pattern display layer and having a microstructure (21) to provide a second pattern; and
a reflective layer (10) overlying the microstructure (21);
when the decorative film is in use, an observer can see a display pattern composed of the first pattern and the second pattern on the first side of the pattern display layer.

2. The decorative film (1, 2) according to claim 1, wherein the reflective layer (10) is formed by an evaporation process or a sputtering process, or the reflective layer (10) is formed by performing a corona treatment or a plasma treatment on the extrusion-embossed microstructure layer (20) first, and then performing an evaporation process or a sputtering process thereon, and the evaporation process or the sputtering process uses a material selected from a group consisting of aluminum, indium, tin, chromium and ZnS.

3. The decorative film (1, 2) according to claim 1, wherein the extrusion-embossed microstructure layer (20) is formed by performing a polymer material extrusion-coating operation and a roller embossing operation on the pattern display layer.

4. The decorative film (1, 2) according to claim 1, wherein the printed layer (10) is on the second side of the pattern display layer.

5. The decorative film (1, 2) according to claim 1, wherein the printed layer (10) is on the first side of the pattern display layer.

6. A packaging material having a substrate and the decorative film (1, 2) according to any one of the claims 1 to 5, the decorative film (1, 2) being attached on the substrate.

7. The packaging material according to claim 6, wherein the substrate is a flexible substrate.

8. The packaging material according to claim 6, wherein the substrate is a rigid substrate.

9. The packaging material according to claim 6, wherein the substrate includes:
an aluminum foil layer (60), a surface of which is attached with the reflective layer (10) to provide a barrier to gas and moisture; and
a heat sealing layer (70) attached with another surface of the aluminum foil layer (60) to provide a heat sealing function for the packaging material, the heat sealing layer (70) being realized by a material selected from a group consisting of PP, PE and EVA, and being a single layer or a multilayer coextruded film.

10. A label sticker comprising:
the decorative film (1, 2) according to any one of the claims 1 to 5; and
a release paper layer (90) attached with the decorative film (1, 2) via a pressure sensitive adhesive layer (80).
